# EUROPEAN PATENT APPLICATION

(11) **EP 1 447 982 A2**
(43) Date of publication of application: **18.08.2004**
(21) Application number: 04003512.3
(22) Date of filing: 17.02.2004
(51) Int. Cl.: H04N 7/00

(54) **Method of controlling ETT information display on electronic program guide screen of digital television**

(30) Priority: 17.02.2003 KR 2003009911
(71) Applicant: Samsung Electronics Co., Ltd., Suwon-si, Gyeonggi-do (KR)
(72) Inventor: Won, Yong-Moon, Suji-eub, Yongin-si, Gyeonggi-do (KR)
(74) Representative: Lang, Johannes, Dipl.-Ing.

(57) **Abstract**

A method of controlling an ETT (Extended Text Table) information display on an EPG (Electronic Program Guide) screen for a digital TV to enable viewers to conveniently confirm existence of the ETT information included in an EPG information. The present invention detects an ETT packet by confirming packet identifiers (PIDs) of all packets received from a set top box, and displays existence of the ETT information only for an EPG program where the ETT packet is detected. Therefore, the viewers can easily confirm whether the ETT information exists by seeing the EPG screen only.

## Description

### CROSS-REFERENCE TO RELATED APPLICATION

This application claims the benefit of Korean Patent Application No. 2003-9911 filed on February 17, 2003, the disclosure of which is hereby incorporated herein by reference in its entirety.

### BACKGROUND OF INVENTION

### 1. Field of the Invention

The present invention generally relates to a method of controlling an ETT (Extended Text Table) information display on an EPG (Electronic Program Guide) screen for a digital TV, and more specifically, to a method of controlling an extended text table (ETT) information display on an electronic program guide screen for a digital TV to enable viewers to conveniently confirm whether or not extended text table (ETT) information included in an electronic program guide (EPG) information.

### 2. Description of Related Art

Generally, on the digital TV broadcasting, all signals transmitted to homes from broadcasting stations as well as TV sets are digital signals, thereby supplying clear picture quality and vivid sound quality compared to an analog system. The digital broadcasting transmits programs compressed and multiplexed according to, for example, MPEG (Motion Pictures Experts Group) standards.

Among the MPEG standards, MPEG-2 is an international standard to transmit various data and videos for advanced television broadcasting and satellite broadcasting.

It is stipulated in MPEG-2 that various signals for motion pictures, sounds, and other additional service information should be packetized as bit streams, which are divided into a program stream and a transport stream.

Through multimedia communication using MPEG-2, a transmitter loads a lot of information into the transport stream and delivers it, and a receiver extracts the loaded information by parsing the information with the transport stream including the information. Then, the extracted information is decoded.

The transport stream includes broadcasting program guide information of each channel and time as well as broadcasting programs for the digital TV broadcasting. In this case, the program information serviced by being included in such digital broadcasting signals is named electronic program guide (EPG) information.

One definition of an electronic program guide (EPG) and SI (System Information) is a PSIP (Program and System Information Protocol).

The program and system information protocol (PSIP) is an ATSC (Advanced Television Systems Committee) standard for terrestrial and cable digital broadcasting, defined to supply various information relating to programs by parsing messages encoded with an MPEG-2 method, as outlined, for example, in ATSC Standard Document A/65B "Program and System Information Protocol for Terrestrial Broadcast and Cable (Revision B)," by Advanced Television Systems Committee (March 18, 2003), and ATSC Recommended Practice Document A/69 "Program and System Information Protocol Implementation Guidelines for Broadcasters," by Advanced Television Systems Committee (June 25, 2002).

The program and system information protocol (PSIP) is composed of many tables to transceive A/V (audio/video) data made in AC-3 audio and MPEG-2 video formats and to transmit information on channels and programs of each broadcasting station.

Also, the program and system information protocol (PSIP) can support a main function performing A/V services for desirous broadcast by selecting a channel and an electronic program guide (EPG) for broadcasting channels, that is, an additional function of broadcasting guide service. At this time, channel information for channel selecting and information on a packet identifier (PID) number for A/V reception are transmitted through a VCT (Virtual Channel Table), while electronic program guide (EPG) information of the broadcasting programs of each channel is transmitted through an EIT (Event Information Table), respectively. Here, the EIT has titles, start time, etc., that are information on events of virtual channels. On this occasion, one event mostly indicates a typical TV program.

An electronic program guide (EPG) signal is a channel program information signal transmitted with a broadcasting signal. Channel program information loaded into the electronic program guide (EPG) signal includes simple information (extended text table (ETT)) such as program genres, titles, broadcasting times. The received broadcasting signal and the electronic program guide (EPG) information are separated and demodulated to an original signal. That is, since it is inappropriate to display the received broadcasting signal and the electronic program guide (EPG) information, the signal and the information are demodulated to original signal types to change them to appropriate types.

The event information of electronic program guide (EPG) information is separated by time and broadcasting channel, and is then stored in memory. The electronic program guide (EPG) information will be read from memory and displayed as an electronic program guide (EPG) screen on a display in response to a display control command.

Extended text table (ETT) information is re-divided into channel extended text message (ETM) information and event extended text message (ETM) information. The channel extended text message (ETM) information includes a short explanation for each channel, and the event extended text message (ETM) information includes information on each program of the channels. And, the extended text table (ETT) information including the channel extended text message (ETM) information and the event extended text message (ETM) information is received from each physical channel (PC), stored in an internal memory of a digital broadcasting receiver, and is selectively displayed according to channel changing.

Namely, when a user inputs a channel changing key signal to change a channel while looking and listening, channel information (channel ETM) on the changed channel as well as information (event ETM) on a currently broadcasted program is configured on a predetermined guide screen (for instance, channel banner screen), and is displayed on the screen for a preset predetermined time. Thus, the user can refer to the changed channel and program information of the corresponding channel.

Meanwhile, the extended text table (ETT) information is transmitted in considerable size within program and system information protocol (PSIP) information, and is stored in the internal memory of the digital broadcasting receiver. In this case, when displaying the extended text table (ETT) information, not the entire extended text table (ETT) information but necessary information only is extracted by selection of a user (viewer), and is displayed on a predetermined guide screen.

That is, the user can selectively set a banner screen option including information contents of the banner screen composed of the extended text table (ETT) information as well as whether or not the information is displayed. For example, the user sets an information type (short or detailed information) of the displayed banner screen as well as whether or not the banner screen is displayed based on the extended text table (ETT) information during channel changing. Then, the digital broadcasting receiver selectively extracts necessary information only from the extended text table (ETT) information stored in the memory based on the banner screen information set by the user, and displays the extracted information.

Arranging the method of displaying the electronic program guide (EPG) information on a general digital TV, the electronic program guide (EPG) screen displays broadcasting stations, broadcasting times, and program titles only. So, in order to see extended text table (ETT) contents of a specific program within the electronic program guide (EPG), it is possible to see the extended text table (ETT) information included in the program by clicking (selecting) a title of the specific program within the displayed electronic program guide (EPG).

Here, it is available to implement the present invention by including program titles and detailed information (extended text table (ETT) information) on one electronic program guide (EPG) screen. But configuration of the screen becomes complicated, viewers can confirm necessary information easily. Therefore, so as to overcome this disadvantage, a method of linking the extended text table (ETT) information with the program titles and displaying the extended text table (ETT) information on a TV screen by clicking (selecting) the program titles has been used.

However, with the prior electronic program guide (EPG) displaying method like above, viewers cannot recognize which program includes the extended text table (ETT) information while watching the electronic program guide (EPG) screen.

Here, the viewers selectively click programs to check for existence of the extended text table (ETT) information, and use the extended text table (ETT) information only when the extended text table (ETT) information is found and displayed. Accordingly, when there are many programs, it takes a lot of time to confirm the extended text table (ETT) information exists.

### SUMMARY OF THE INVENTION

It is, therefore, an object of the present invention to provide a method of controlling an extended text table (ETT) information display on an electronic program guide screen for a digital TV to enable viewers to conveniently confirm whether or not the extended text table (ETT) information included in an electronic program guide (EPG) exists.

To achieve the above object, according to one embodiment of the method of controlling the extended text table (ETT) information display on the electronic program guide (EPG) screen for the digital TV in accordance with the present invention, the method comprises the steps of: detecting whether an extended text table (ETT) packet exists by retrieving received packets; confirming a program including the extended text table (ETT) packet if the extended text table (ETT) packet exists after a detected result; giving extended text table (ETT) existence information to an electronic program guide (EPG) program including the extended text table (ETT) packet; and controlling electronic program guide (EPG) performance to display the electronic program guide (EPG) screen where the extended text table (ETT) existence information is displayed, if an electronic program guide (EPG) ON command is requested after giving the extended text table (ETT) existence information. Here, the extended text table (ETT) packet is detected by confirming packet identifiers (PIDs) of all the received packets.

According to another embodiment of the present invention, the extended text table (ETT) existence information is given to the electronic program guide (EPG) program by coloring the electronic program guide (EPG) program including the extended text table (ETT) information or by inserting character information informing of existence of the extended text table (ETT) information in a predetermined position of the electronic program guide (EPG) program including the extended text table (ETT) information.

According to still another embodiment of the present invention, the extended text table (ETT) existence information is given to the electronic program guide (EPG) program by adding a specific icon to the electronic program guide (EPG) program including the extended text table (ETT) information, or by 2-dimensionally processing an image process of the electronic program guide (EPG) program including the extended text table (ETT) information. Furthermore, the extended text table (ETT) existence information is given by 3-dimensionally processing an image process of the electronic program guide (EPG) program including the extended text table (ETT) information.

### BRIEF DESCRIPTION OF THE DRAWINGS

A more complete appreciation of the present invention, and many of the attendant advantages thereof, will become readily apparent as the same becomes better understood by reference to the following detailed description when considered in conjunction with the accompanying drawings in which like reference symbols indicate the same or similar components, wherein:
Fig. 1 is a diagram illustrating a system configuration of a representative general digital TV;
Fig. 2 is an example diagram of a representative electronic program guide (EPG) screen;
Fig. 3 is a diagram illustrating a representative extended text table (ETT) format;
Fig. 4 is a diagram illustrating an operational flowchart for a method of controlling an extended text table (ETT) information display on an electronic program guide screen for a digital TV in accordance with embodiments of the present invention;
Fig. 5 is an electronic program guide (EPG) menu screen illustrating one embodiment of an electronic program guide (EPG) screen applied with the present invention.

### DESCRIPTION OF THE PREFERRED EMBODIMENT(S)

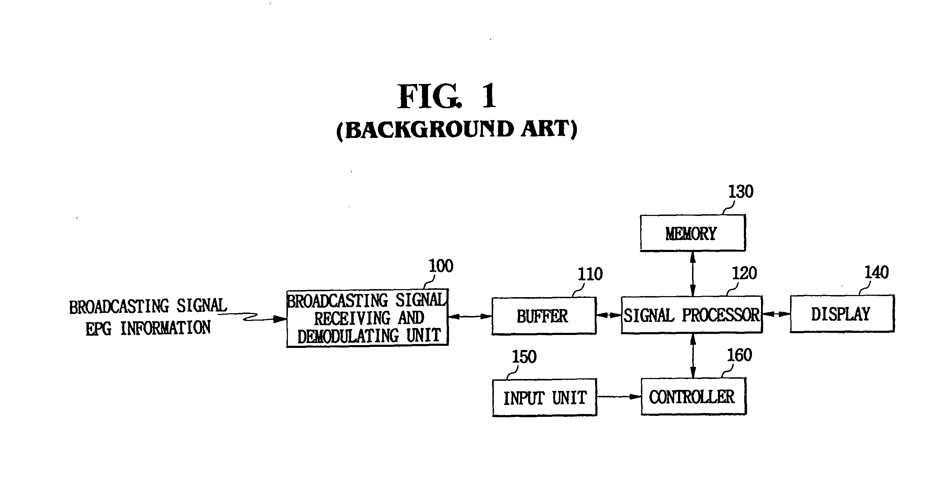

Fig. 1 is a system format diagram of a representative general digital TV for implementing and expressing much information included in a program and system information protocol (PSIP) as an electronic program guide (EPG), and for displaying the electronic program guide (EPG) on a screen.

As shown in Fig. 1, the representative general digital TV comprises: a broadcasting signal receiving and demodulating unit 100 for receiving and demodulating a broadcasting signal and electronic program guide (EPG) information; a buffer 110 for storing the demodulated electronic program guide (EPG) information; a signal processor 120 for functionally separating the electronic program guide (EPG) information stored in the buffer 110; a memory 130 for functionally storing the electronic program guide (EPG) information; a display 140 for displaying the electronic program guide (EPG) information, stored in the memory 130, on a screen; an input unit 150 for user selection of an electronic program guide (EPG) display selection key and program information; and a controller 160 controlling read/write processes of the memory 130 where the electronic program guide (EPG) information is stored, and controlling an electronic program guide (EPG) screen display.

A system configuration of the general digital TV configured like above will be simply described as follows.

An electronic program guide (EPG) signal is a channel program information signal transmitted with a broadcasting signal. Channel program information loaded into the electronic program guide (EPG) signal includes simple information such as program genres, titles, broadcasting times. The broadcasting signal receiving and demodulating unit 100 receives the broadcasting signal and the electronic program guide (EPG) information to separate them, and demodulates the broadcasting signal and the electronic program guide (EPG) information to original signals appropriate for display.

The buffer 110 stores the electronic program guide (EPG) information demodulated in the broadcasting signal receiving and demodulating unit 100. The signal processor 120 functionally separates the electronic program guide (EPG) information stored in the buffer 110. In another words, event information is separated by times and broadcasting channels, then is store in the memory 130.

In this case, when a viewer inputs an electronic program guide (EPG) ON command by using the input unit 150 in order to use the electronic program guide (EPG) information, the electronic program guide (EPG) information read from the memory 13 is displayed through the display 140 by a display control command of the controller 160.

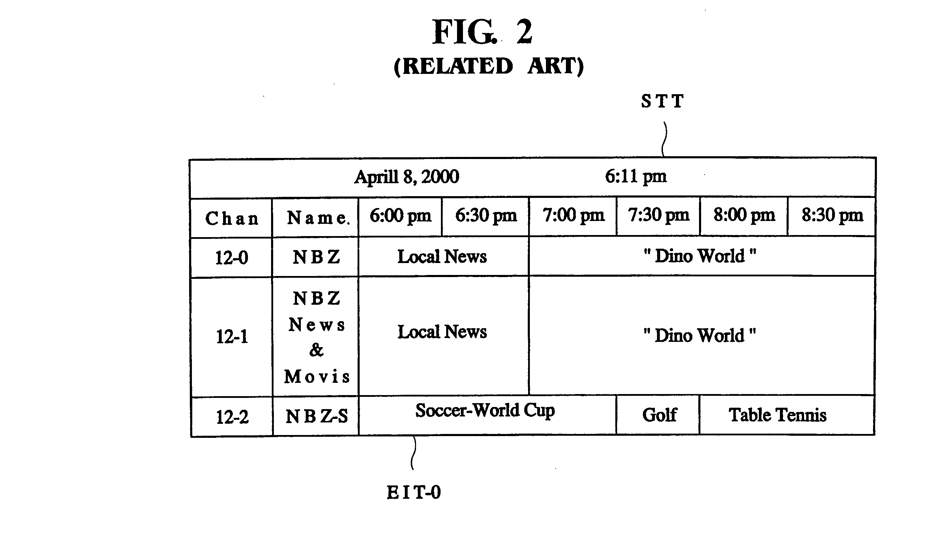

Fig. 2 is an example diagram of a representative electronic program guide (EPG) screen. The electronic program guide (EPG) screen illustrated in Fig. 2 is an EPG confirmed at 6:11 P.M. on Apr. 8, 2000. Here, 'Chan' means virtual channels, 'Name' indicates broadcasting stations, and the rest are timed broadcast programs of each broadcasting station. In the diagram the term STT refers to the system time table and lists the date and time of day, and the term EIT-0 refers to the event information table corresponding to a current three (3) hour period of programming. Generally, an event information table (EIT) the program and system information protocol table that caries program schedule information (titles, start time, etc.) for each virtual channel; note that the terms program and event are synonymous.

The PSIP tables configuring the electronic program guide (EPG) contains: the STT (System Time Table); a MGT (Master Guide Table); a VCT (Virtual Channel Table) composed of IDs for each information table included in program and system information protocol (PSIP) information, size of each information table and many VCs (Virtual Channels) included in a physical channel, names for many channels existing in one frequency as well as channel numbers, modulating methods, and ID information of a transport stream corresponding to the channels; an event information table (EIT); an RRT (Rating Region Table) transmitting information on local and consultation organs for program ratings; an optional extended text table (ETT) including channel ETM (Extended Text Message) information including an explanation of a corresponding channel, and event ETM information including an explanation of of a corresponding program; a PAT (Program Association Table); and a PMT (Program Map Table).

In order to see extended text table (ETT) information included in the electronic program guide (EPG) information, it is possible to obtain extended text table (ETT) information included in a program by clicking (selecting) a name of the program (i.e., program listing) within the displayed electronic program guide (EPG) information, if the optional extended text table (ETT) information exists. Note that in the example of Fig. 2, there is no visual indication provided to the user to indicate that an extended text table (ETT) exists for any of the programs.

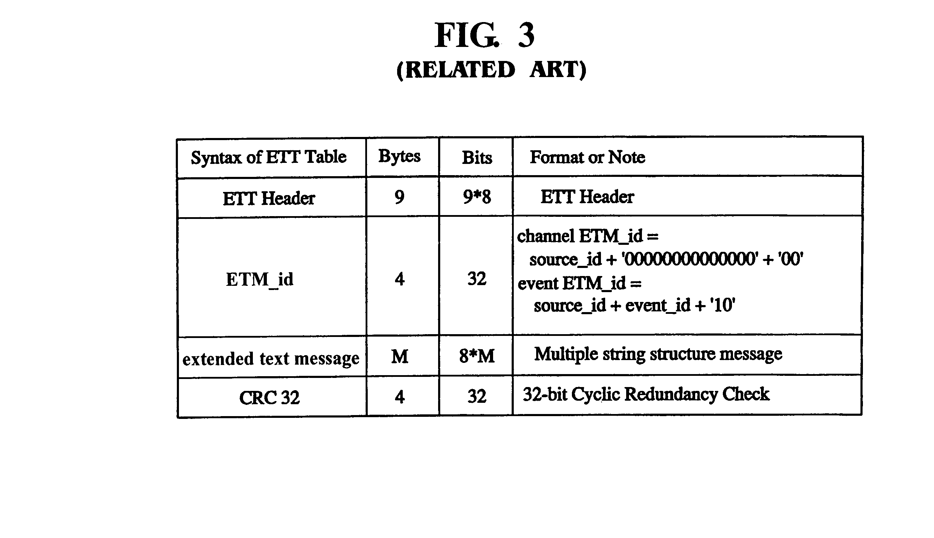

Fig. 3 is a diagram illustrating a representative extended text table (ETT) format. As shown in Fig. 3, the extended text table (ETT) format is divided into a 9-byte extended text table (ETT) header information part, a 4-byte ETM_id (extended text message ID) information part, a predetermined-byte (M) ETM (extended text message) part, and a 4-byte CRC 32 (32-bit Cyclic Redundancy Check) information part. The event extended text message (ETM), for example, will be displayed when a program including an extended text table (ETT)information, is selected by a viewer of the of the displayed EPG of Fig. 2.

A preferred embodiment of a method of controlling display of a visual indicator, indicative of extended text table (ETT) information (also known as an extended text message (ETM)), on an electronic program guide (EPG) screen for a digital television (DTV), according to the present invention, will now be described with reference to the accompanying drawings. That is, a method of displaying a visual indication that an extended text table (ETT) exists for a TV program listed in a cell of an electronic program guide (EPG) screen of a digital television (DTV).

A system applied with the present invention is a set top box installed on a front of a general digital TV system like shown in Fig. 1, and particularly, is a microprocessor overall controlling electronic program guide (EPG) performance within the set top box. Since a configuration of the set top box is generally implemented in the general digital TV system like shown in Fig. 1, detailed configuration and operation descriptions will be omitted in order to avoid overlapping.

Before explaining desirable embodiments of the present invention, a concept of the present invention will be simply described as follows.

In a digital TV system like shown in Fig. 1, a displayed electronic program guide (EPG) screen simply displays broadcasting stations, broadcasting times, and program titles only. Thus, viewers cannot identify if the extended text table (ETT) information is included in programs. In addition, to confirm existence of the extended text table (ETT) information, the viewers have to click (select), one at a time, all titles of desirous programs in an electronic program guide (EPG). Therefore, it causes a lot of inconvenience of confirming the extended text table (ETT) information.

So, the present invention detects an extended text table (ETT) packet by confirming packet identifiers (PIDs) of all packets received from a set top box, and displays an indication that the extended text table (ETT) information exists, only for an electronic program guide (EPG) program where the extended text table (ETT) packet is detected. Thus, viewers can easily confirm whether the extended text table (ETT) information exists by merely viewing an electronic program guide (EPG) screen.

Here, the packet identifiers (PIDs) show each identity given to packets of a multiplexed transport stream (TS). When multiplexing signals of various channels on digital broadcasting and transmitting the multiplexed signals by using one transmission path, each channel signal is packetized by being independently compressed. Then, the packets are transmitted in transport stream (TS) type by being multiplexed. In this case, a packet corresponding to a certain channel is given the same packet identifier (PID) to distinguish the packet from packets of other channels. So, when distinguishing the packets according to each channel and transmitting the packets by giving specific IDs, a receiver selects (demultiplexes) packets only of desirous channels from a multiplexed transport stream (TS) by using a packet ID of the corresponding channel, and abandons the rest packets.

Table 1 below is a MGT (Master Guide table), a table configuring a program and system information protocol (PSIP).

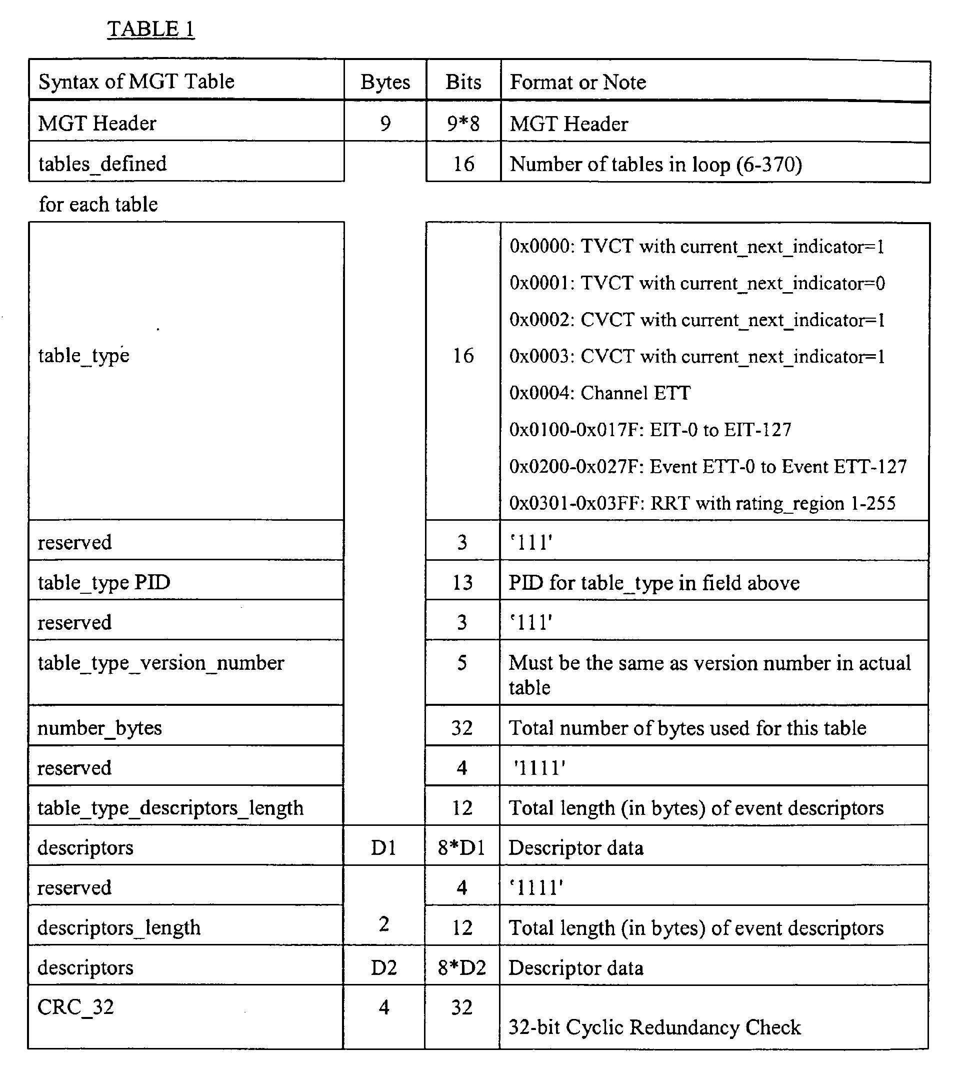

The master guide table (MGT) contains information on all program and system information protocol (PSIP) tables.

Also, the master guide table (MGT) includes version numbers, table size, and table packet identifiers (PIDs) of the tables configuring the program and system information protocol (PSIP).

Monitoring the master guide table (MGT), it is available to know whether contents of the tables configuring the program and system information protocol (PSIP) are changed. Thus, the master guide table (MGT) plays an important role in the program and system information protocol (PSIP). So, the master guide table (MGT) always has a base_PID (0x1FFB), and the set top box parses the master guide table (MGT) always having the base_PID.

A packet identifier (PID) corresponding to an extended text table (ETT) is described within the master guide table (MGT), and the master guide table (MGT) is always parsed in the set top box. Therefore, it is possible to confirm the extended text table (ETT) PID (packet identifier) within the master guide table (MGT).

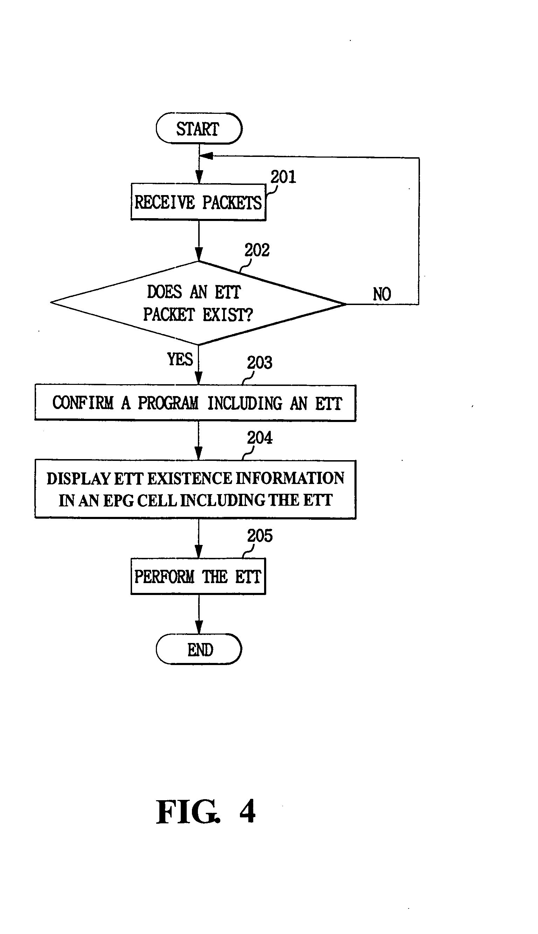

Fig. 4 is a diagram illustrating an operational flowchart for a method of controlling an extended text table (ETT) information display on an electronic program guide (EPG) screen for a DTV in accordance with the present invention.

Like shown in Fig. 4, the method comprises the steps of: detecting whether an extended text table (ETT) packet exists by retrieving received packets (step 201, 202); confirming a television (TV) program (or virtual (TV) channel) including the extended text table (ETT) packet, if the extended text table (ETT) packet exists after a detected result in the step '202' (step 203); displaying an electronic program guide (EPG) screen, when an electronic program guide (EPG) ON command is requested by a viewer, and displaying extended text table (ETT) existence information in an EPG cell, corresponding to the TV program (or channel) including the extended text table (ETT) packet, of the displayed electronic program guide (EPG) screen (step 204); and, when a viewer selects (clicks) the visual indicator by use, for example, of a remote control (not shown), controlling electronic program guide (EPG) performance to display the extended text table (ETT) information, i.e., extended text message (ETM).

The method of controlling the extended text table (ETT) information display on the electronic program guide (EPG) screen for the digital television (DTV) by the present invention configured like above will be more fully described as follows.

A microprocessor of a set top box (neither are shown) receives broadcasting packets (step 201), and confirms whether an extended text table (ETT) packet exists by retrieving the received packets (step 202) of a transport stream (TS). That is, since all the packets implementing the electronic program guide (EPG) include packet identifiers (PIDs) and the packet identifiers (PIDs) have unique values for every packet, the extended text table (ETT) packet can be detected by confirming, using software, the packet identifiers (PIDs) of all the packets received in the set top box.

For example, MPEG-2 TS packets may include for tables MGT, STT, RRT and VCT a base PID 0x1FFB, a PID 1x1FD0 for the EIT-0 and a PID 0x1BA0 for ETT-0.

Then, it is confirmed which program (or channel) includes the extended text table (ETT) packet (step 203). In another words, the program including extended text table (ETT) is divided.

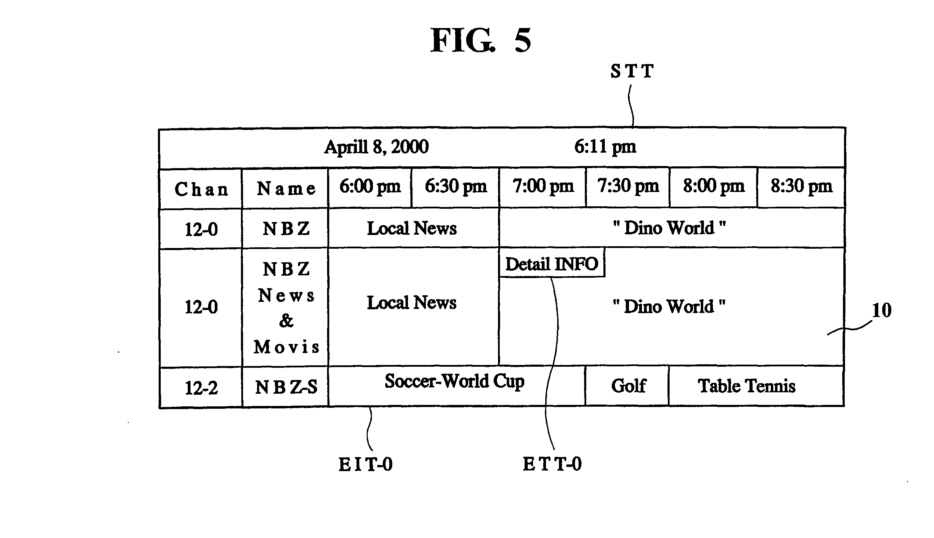

In order that viewers, or set top box users, easily confirm information in an extended text table (ETT) contained in the electronic program guide (EPG) contents, extended text table (ETT) existence information is provided to a cell (10 in Fig. 5) of the EPG screen listing the program ("Dino World" in Fig. 5) including the extended text table (ETT) (step 204).

Here, the extended text table (ETT) existence information can be provided by coloring the electronic program guide (EPG) program cell including the extended text table (ETT) information or by adding a specific icon to the electronic program guide (EPG) program cell including the extended text table (ETT) information.

Also, the extended text table (ETT) existence information can be provided by 2-dimensionally or 3-dimensionally processing an image process of an electronic program guide (EPG) program cell including the extended text table (ETT) information. Moreover, the extended text table (ETT) existence information can be provided by inserting character information (see ETT-0 in Fig. 5) informing of existence of the extended text table (ETT) information into a predetermined posi tion of the electronic program guide (EPG) program cell including the extended text table (ETT) information.

The above method of providing the extended text table (ETT) information can be independently applied, or various providing methods can be complexly applied when necessary. For example, it is possible to perform coloring of the electronic program guide (EPG) program cell including the extended text table (ETT) information and simultaneously provide the specific icon.

In this case, (step 204), when the electronic program guide (EPG) ON command is requested by viewers or set top box users, the electronic program guide (EPG) performance is controlled to display the electronic program guide (EPG) screen and display a visual indicator indicative of the existence the extended text table (ETT) information.

Then, when a user selects the visual indicator, the extended text table (ETT) information, or extended text message (ETM) is displayed (step 205).

Therefore, the viewers or the set top box users can easily identify which program includes the extended text table (ETT) information by watching the electronic program guide (EPG) screen for the visual indicator of the extended text table (ETT) information.

Fig. 5 is an electronic program guide (EPG) screen showing one embodiment of an electronic program guide (EPG) screen applied with the present invention, displaying characters as a visual indicator regarding the existence of extended text table (ETT) information such as characters "Detail INFO" (see ETT-0) in a predetermined position of a cell portion 10 of the EPG screen where a name of a program "Dino World," including the extended text table (ETT) information, is displayed. The term STT refers to the system time table and lists the time of day, term EIT-0 refers to the event information table corresponding to a current three (3) hour period of programming, and ETT-0 refers to the extended text table corresponding to EIT-0 and illustrates an indication of the existence of an extended text message which will provide additional information, or description, regarding the program "Dino World."

According to the "method of controlling the extended text table (ETT) information display on an electronic program guide screen for a digital TV" by the present invention described so far, by displaying a visual indicator viewers can easily identify which program includes the extended text table (ETT) information on the electronic program guide (EPG) screen.

In addition, since it is possible to easily identify the program including the extended text table (ETT) information on the electronic program guide (EPG) screen, the present invention can be conveniently applied when using the extended text table (ETT) information.

## Claims

1. A method of controlling an extended text table (ETT) information display on an electronic program guide (EPG) screen for a digital television, the method comprising steps of:
detecting whether an extended text table (ETT) packet exists by retrieving received packets;
confirming a program including the extended text table (ETT) packet, when the existence of the extended text table (ETT) packet is detected;
providing a visual indicator to a television program listed in an electronic program guide (EPG) displayed on the electronic program guide (EPG) screen, when an electronic program guide (EPG) ON command is requested by a viewer of said digital television, said visual indicator providing a visual indication of the existence of extended text table (ETT) information corresponding to said program; and
displaying an extended text message (ETM) corresponding to the extended text table (ETT) information, said extended text message (ETM) providing detailed information about the television program, when the user selects the visual indicator.

2. The method as set forth in claim 1, said step of detecting comprising detecting packet identifiers (PIDs) of all the received packets of a transport stream for a PID value corresponding to the extended text table (ETT) packet.

3. The method as set forth in claim 1, said step of providing a visual indicator comprising providing a unique color to a cell portion of the electronic program
guide (EPG) screen corresponding to the television program including the extended text table (ETT) information.

4. The method as set forth in claim 1, said step of providing a visual indicator comprising inserting character information pertaining to the existence of the extended text table (ETT) information in a predetermined position of a cell portion of the electronic program guide (EPG) screen corresponding to the television program including the extended text table (ETT) information.

5. The method as set forth in claim 1, said step of providing a visual indicator comprising adding a specific icon to a cell portion of the electronic program guide (EPG) screen corresponding to the television program including the extended text table (ETT) information.

6. The method as set forth in claim 1, said step of providing a visual indicator comprising 2-dimensionally processing a cell portion of the electronic program guide (EPG) screen corresponding to the television program including the extended text table (ETT) information.

7. The method as set forth in claim 1, said step of providing a visual indicator comprising 3-dimensionally processing a cell portion of the electronic program guide (EPG) screen corresponding to the television program including the extended text table (ETT) information.

8. A method of controlling an extended text table (ETT) information display on an electronic program guide (EPG) screen for a digital television, the method comprising steps of:
detecting whether an extended text table (ETT) packet exists by retrieving received packets;
confirming a virtual channel including the extended text table (ETT) packet, when the existence of the extended text table (ETT) packet is detected;
providing a visual indicator to a television channel listed in an electronic program guide (EPG) displayed on the electronic program guide (EPG) screen, when an electronic program guide (EPG) ON command is requested by a viewer of said digital television, said visual indicator providing a visual indication of the existence of extended text table (ETT) information corresponding to said television channel; and
displaying an extended text message (ETM) corresponding to the extended text table (ETT) information, said extended text message (ETM) providing detailed information about the television channel, when the user selects the visual indicator.

9. The method as set forth in claim 8, said step of detecting comprising detecting packet identifiers (PIDs) of all the received packets of a transport stream for a PID value corresponding to the extended text table (ETT) packet.

10. The method as set forth in claim 8, said step of providing a visual indicator comprising providing a unique color to a cell portion of the electronic program guide (EPG) screen corresponding to the television channel including the extended text table (ETT) information.

11. The method as set forth in claim 8, said step of providing a visual indicator comprising inserting character information pertaining to the existence of the extended text table (ETT) information in a predetermined position of a cell portion of the electronic program guide (EPG) screen corresponding to the television channel including the extended text table (ETT) information.

12. The method as set forth in claim 8, said step of providing a visual indicator comprising adding a specific icon to a cell portion of the electronic program guide (EPG) screen corresponding to the television channel including the extended text table (ETT) information.

13. The method as set forth in claim 8, said step of providing a visual indicator comprising 2-dimensionally processing a cell portion of the electronic program guide (EPG) screen corresponding to the television channel including the extended text table (ETT) information.

14. The method as set forth in claim 8, said step of providing a visual indicator comprising 3-dimensionally processing a cell portion of the electronic program guide (EPG) screen corresponding to the television channel including the extended text table (ETT) information.
